# EUROPEAN PATENT APPLICATION

(11) **EP 4 832 120 A1**
(43) Date of publication of application: **28.10.2026**
(21) Application number: 24915514.4
(22) Date of filing: 14.11.2024
(51) Int. Cl.: H01M 4/86, H01M 4/90, H01M 4/92, B01J 27/13, B01J 27/24, B01J 27/12, H01M 8/1004, H01M 8/10

(54) **CATALYST LAYER FOR FUEL CELL, MEMBRANE-ELECTRODE ASSEMBLY, AND FUEL CELL COMPRISING SAME**

(30) Priority: 02.01.2024 KR 20240000241; 12.11.2024 KR 20240160508
(71) Applicant: Kolon Industries, Inc., Seoul 07793 (KR)
(72) Inventor: KIM, Jung Ho, Seoul 07793 (KR); KIM, Jun Young, Seoul 07793 (KR); SONG, Kah Young, Seoul 07793 (KR); KONG, Nak Won, Seoul 07793 (KR); LEE, Eun Su, Seoul 07793 (KR); KIM, Hyeong Su, Seoul 07793 (KR); LEE, Ju Sung, Seoul 07793 (KR); NAM, Kyoung Sik, Seoul 07793 (KR); PARK, Chan Mi, Seoul 07793 (KR)
(74) Representative: Vossius & Partner Patentanwälte Rechtsanwälte mbB
(86) International application number: PCT/KR2024/017947
(87) International publication number: WO 2025/146930

(57) **Abstract**

Disclosed is a catalyst layer for a fuel cell having improved water repellency, thermal conductivity, and output. The catalyst layer according to one aspect comprises a catalyst and a functional surface layer disposed on at least one surface thereof, the functional surface layer comprising functional nanoparticles comprising any one or more selected from the group consisting of a first fluorinated carbon nanoparticles, boron nitride nanoparticles, fluorinated boron nitride nanoparticles, and a composite containing second fluorinated carbon nanoparticles and IrOₓ nanoparticles (x is 1, 2, or 3).

## Description

### Technical Field

The present disclosure relates to a catalyst layer for a fuel cell, and more specifically, to a catalyst layer for a fuel cell, a membrane-electrode assembly, and a fuel cell including the same.

### Background Art

Fuel cells are batteries that directly convert chemical energy generated by oxidation of fuel into electrical energy, and are attracting attention as a next-generation energy source due to their high energy efficiency and eco-friendly characteristics with low pollutant emissions. Such fuel cells generally have a structure in which an anode and a cathode are formed on both sides of a polymer electrolyte membrane, respectively, and such a structure is referred to as a membrane-electrode assembly (MEA) .

The fuel cells may be classified according to the type of electrolyte membrane into alkaline electrolyte fuel cells, polymer electrolyte membrane fuel cells (PEMFCs), etc. Among these fuel cells, the polymer electrolyte membrane fuel cells are attracting attention as portable, automotive, and home power supply devices due to their advantages such as a low operating temperature of less than 100°C, fast start-up and response characteristics, and excellent durability. Representative examples of such polymer electrolyte membrane fuel cells include proton exchange membrane fuel cells (PEMFCs) that use hydrogen gas as fuel, etc.

Meanwhile, polymer electrolyte membrane fuel cells still have technical barriers that make it difficult to improve the stability and durability of the membrane-electrode assembly, such as water flooding in the fuel cell, abnormal reaction gas supply, and heat generation during operation. In particular, when a cell reversal phenomenon is caused by hydrogen starvation at the anode, a problem arises in that corrosion of the carbon-based carrier proceeds due to the high voltage, which significantly reduces the stability and durability of the membrane-electrode assembly.

### DISCLOSURE

### Technical Problem

According to one aspect of the present disclosure, there is provided a catalyst layer for a fuel cell that improves output performance and durability.

According to another aspect of the present disclosure, there is provided a catalyst layer for a fuel cell that has excellent water-repellent performance by preventing flooding, a phenomenon in which the pores of an electrode are fully filled with water.

According to still another aspect of the present disclosure, there is provided a catalyst layer for a fuel cell that has excellent heat dissipation performance by increasing thermal conductivity.

According to yet another aspect of the present disclosure, there is provided a catalyst layer for a fuel cell that improves cell reversal tolerance.

According to still yet another aspect of the present disclosure, there is provided a membrane-electrode assembly including the catalyst layer for a fuel cell.

According to further another aspect of the present disclosure, there is provided a fuel cell including the membrane-electrode assembly.

The objects of the present disclosure are not limited to the above-mentioned objects, and other objects and advantages of the present disclosure not mentioned may be understood through the following description and will be more clearly understood through embodiments of the present disclosure. In addition, it will be readily apparent that the objects and advantages of the present disclosure may be realized by the means and combinations thereof set forth in the claims.

### Technical Solution

According to a first aspect of the present disclosure, there is provided a catalyst layer for a fuel cell, including: a catalyst layer; and a functional surface layer disposed on at least one surface of the catalyst layer, wherein the functional surface layer includes at least one functional nanoparticle selected from the group consisting of: a first fluorinated carbon nanoparticle; a boron nitride nanoparticle; a composite including a second fluorinated carbon nanoparticle and an IrOₓ nanoparticle (where x is 1, 2, or 3); and a fluorinated boron nitride nanoparticle.

According to a second aspect of the present disclosure, in the first aspect, the content of fluorine in the first fluorinated carbon nanoparticle may be 5 wt% or more and 90 wt% or less based on the total weight of the first fluorinated carbon nanoparticle.

According to a third aspect of the present disclosure, in the first or second aspect, the content of fluorine in the fluorinated boron nitride nanoparticle may be 5 wt% or more and 90 wt% or less based on the total weight of the fluorinated boron nitride nanoparticle.

According to a fourth aspect of the present disclosure, in any one of the first to third aspects, the thickness of the functional surface layer may be 0.2 µm or more and 2.0 µm or less.

According to a fifth aspect of the present disclosure, in any one of the first to fourth aspects, the functional surface layer may cover 20% or more and 80% or less of the total active area of one surface that is in contact with the catalyst layer.

According to a sixth aspect of the present disclosure, in any one of the first to fifth aspects, the IrOₓ nanoparticle (where x is 1, 2, or 3) may be loaded on the second fluorinated carbon nanoparticle, and the loading amount of the IrOₓ nanoparticle may be 30 wt% or more and 75 wt% or less based on the total weight of the composite.

According to a seventh aspect of the present disclosure, in any one of the first to sixth aspects, the loading amount of the functional nanoparticle may be 0.03 mg/cm² or more and 1.0 mg/cm² or less.

According to an eighth aspect of the present disclosure, there is provided a membrane-electrode assembly including: a polymer electrolyte membrane; and the catalyst layer for a fuel cell according to any one of the first to seventh aspects, disposed on at least one surface of the polymer electrolyte membrane.

According to a ninth aspect of the present disclosure, the catalyst layer for a fuel cell may include a first catalyst layer disposed on one surface of the polymer electrolyte membrane, and the functional surface layer may include a first functional surface layer disposed on one surface of the first catalyst layer, wherein the first functional surface layer may include the composite, and the first catalyst layer may be an anode.

According to a tenth aspect of the present disclosure, there is provided a fuel cell including the membrane-electrode assembly according to the eighth or ninth aspect.

### Advantageous Effects

According to one aspect of the present disclosure, it is possible to provide a catalyst layer for a fuel cell that has excellent durability even when the fuel cell is operated for a long period of time. In addition, it is possible to increase water repellency in the fuel cell, thereby effectively preventing flooding, a phenomenon in which the pores of an electrode are fully filled with water, and to increase thermal conductivity, thereby effectively dissipating heat generated during fuel cell operation.

According to another aspect of the present disclosure, it is possible to improve cell reversal tolerance by effectively preventing a local hydrogen/oxygen interface from being formed on the anode side when a cell reversal phenomenon in which a cell voltage changes to a negative value while anode potential increases and cathode potential remains in an initial state is caused by hydrogen starvation.

In addition to the effects described above, specific effects of the present disclosure will be described below together with specific contents for carrying out the present disclosure.

### Brief Description of Drawings

Fig. 1 is a cross-sectional view of a catalyst layer for a fuel cell according to one embodiment of the present disclosure.
Fig. 2 is a cross-sectional view of a membrane-electrode assembly according to one embodiment of the present disclosure.
Fig. 3 is a cross-sectional view of a membrane-electrode assembly according to another embodiment of the present disclosure.
Fig. 4 is a schematic view illustrating a fuel cell according to one embodiment of the present disclosure.
Fig. 5A is a scanning electron microscope (SEM) image of the surface of a membrane-electrode assembly manufactured according to Example 1, and Fig. 5B is a schematic view of Fig. 5A.
Fig. 6A is a scanning electron microscope (SEM) image of the surface of a membrane-electrode assembly manufactured according to Example 2, and Fig. 6B is a schematic view of Fig. 6A.
Fig. 7A is a scanning electron microscope (SEM) image of the surface of a membrane-electrode assembly manufactured according to Example 3, and Fig. 7B is a schematic view of Fig. 7A.
Fig. 8A is a scanning electron microscope (SEM) image of the surface of a membrane-electrode assembly manufactured according to Example 4, and Fig. 8B is a schematic view of Fig. 8A.
Fig. 9 shows the results of evaluating the performance of membrane-electrode assemblies, manufactured according to a Comparative Example and Examples, at the beginning of life (BOL) and the end of life (EOL).

### Best Mode

In the present specification, singular expressions include plural expressions unless the context clearly indicates otherwise.

In the present specification, the term "comprise" and/or "comprising" are/is intended to denote the existence of stated shapes, steps, numbers, operations, members, elements, and/or combinations thereof, but do/does not exclude the existence or addition of one or more other shapes, steps, numbers, operations, members, elements, and/or combinations thereof.

In the present specification, "at least one of a, b and c" may include a, b or c alone, or a combination of two or more selected from the group consisting of a, b, and c.

In the present specification, the term "connection" means not only that certain members are structurally connected directly to each other, but also that they are connected indirectly via a third member interposed therebetween.

When multiple embodiments are described in the present specification, these embodiments may be combined with each other unless otherwise particularly stated. In this case, the effects of the present disclosure may be defined as including not only the effect resulting from each embodiment itself, but also the effect resulting from the organic combination of embodiments. For example, even if Embodiments 1 and 2 are described independently in the present specification, Embodiments 1 and 2 may be organically combined with each other, and the effects of the present disclosure may include effects resulting from the combination of Embodiments 1 and 2, unless the context clearly indicates otherwise.

In the present specification, the range of numerical values expressed using the term "to" denotes a range of numerical values that includes numerical values described before and after the term "to" as a lower limit value and an upper limit value. For example, if "a to b" is described in the specification, it may be understood that "a or more and b or less (a to b)" is described.

When a plurality of numerical values as the upper and lower limits of an arbitrary numerical range are disclosed in the present specification, the numerical range disclosed in the present specification may be understood as a range of arbitrary numerical values including any one value among the plurality of lower limit values and any one value among the plurality of upper limit values as a lower limit value and an upper limit value, respectively. For example, if "a or more or b or more; and c or less or d or less" is described, it may be understood that a or more and c or less, a or more and d or less, b or more and c or less, or b or more and d or less is described.

In the present specification, terms such as "about" or "substantially" mean a reasonable amount of deviation of the modified term such that the end result is not significantly changed. These terms may be construed as including a deviation of at least ±5% or at least ±10% of the modified term if this deviation would not negate the meaning of the word it modifies.

In the present specification, the term "layer" or "film" may include, when observing a region in which the layer or film exists, not only a case where the layer or film is formed throughout the region, but also a case where the layer or film is formed only in a portion of the region. For example, the surface of the layer or film may be defined as including a flat form, a non-flat form, and a combination thereof; or a continuous form, a discontinuous form, and a combination thereof. For example, when another member is composed of a layer directly on one member, the coverage of the other member on the surface of the one member may be defined as 1% or more, 5% or more, 10% or more, 20% or more, 30% or more, 40% or more, 50% or more, 60% or more, 70% or more, 80% or more, 85% or more, 90% or more, 95% or more, or 99% or more. For example, even when multiple particles form a clustered structure, this structure may be defined as a "layer" or "film".

In the present specification, the average size of particles may be defined as the particle diameter (D₅₀) at which the cumulative percentage in the volume-based particle size distribution curve is 50% when measured by a laser diffraction particle size distribution analyzer. For example, to measure the average size of particles, the particle size distribution may be calculated by dispersing the particles to be measured in a dispersion medium, and then introducing the dispersion into a commercially available laser diffraction particle size analyzer (e.g., Microtrac S3500) and measuring the particle size-dependent difference in diffraction patterns when the particles pass through the laser beam.

According to one aspect of the present disclosure, there is provided a catalyst layer for a fuel cell, including: a catalyst layer; and a functional surface layer disposed on at least one surface of the catalyst layer, wherein the functional surface layer includes at least one functional nanoparticle selected from the group consisting of: a first fluorinated carbon nanoparticle; a boron nitride nanoparticle; a composite including a second fluorinated carbon nanoparticle and an IrOₓ nanoparticle (where x is 1, 2 or 3); and a fluorinated boron nitride nanoparticle. According to one aspect of the present disclosure, through the functional surface layer including the above-described composition, it is possible to provide a catalyst layer for a fuel cell that has excellent durability even when the fuel cell is operated for a long period of time. In addition, it is possible to increase water repellency in the fuel cell, thereby effectively preventing flooding, a phenomenon in which the electrode pores are fully filled with water, and to increase thermal conductivity, thereby effectively releasing heat generated during fuel cell operation. According to another aspect of the present disclosure, it is possible to improve cell reversal tolerance by effectively preventing the corrosion of carbon, caused by local water on the anode side, by the action of a water-splitting catalyst when the cell reversal phenomenon in which the cell voltage changes to a negative value while the anode potential increases and the cathode potential remains in the initial state is caused by hydrogen starvation.

Hereinafter, the configuration of the present disclosure will be described in more detail with reference to the drawings.

### 1. Catalyst Layer for Fuel Cell

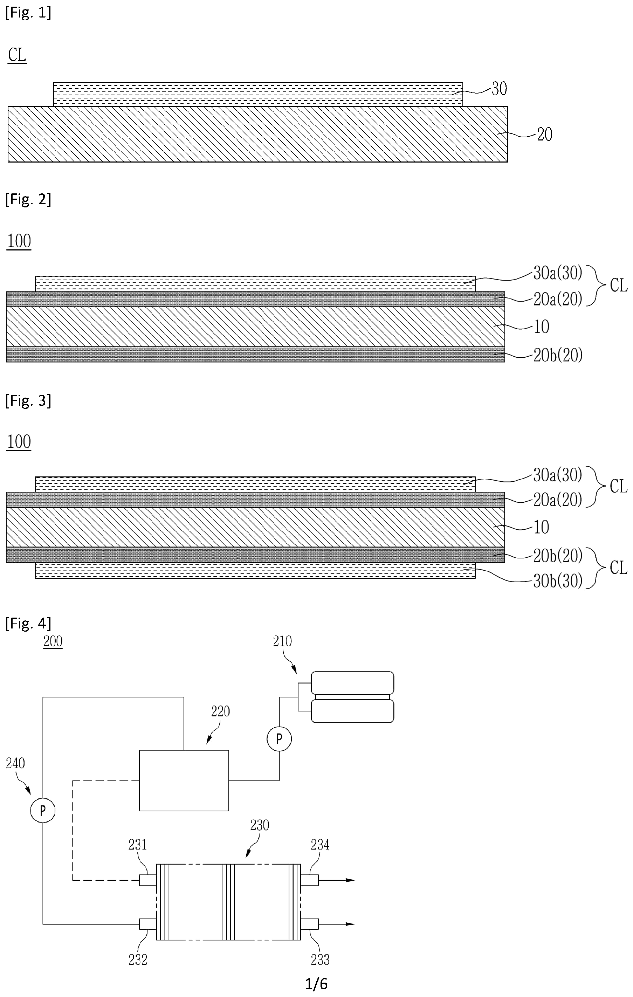

Fig. 1 is a cross-sectional view of a catalyst layer for a fuel cell according to one embodiment of the present disclosure.

Referring to Fig. 1, a catalyst layer CL for a fuel cell according to the present disclosure includes a catalyst layer 20 and a functional surface layer 30 disposed on at least one surface of the catalyst layer 20. For example, the functional surface layer 30 may be disposed on one or both surfaces of the catalyst layer 20.

The functional surface layer 30 according to the present disclosure includes at least one functional nanoparticle selected from the group consisting of: a first fluorinated carbon nanoparticle; a boron nitride nanoparticle; a composite including a second fluorinated carbon nanoparticle and an IrOₓ nanoparticle (where x is 1, 2 or 3); and a fluorinated boron nitride nanoparticle. In the present specification, "carbon nanoparticles" may be defined as nanoparticles containing carbon. For example, the average size or average major axis length of carbon nanoparticles may be 0.1 to 1,000 nm. In addition, the carbon nanoparticles are not particularly limited, but may specifically include one or more selected from the group consisting of graphite, Super P, carbon fibers, carbon sheets, carbon black, ketjen black, denka black, acetylene black, carbon nanotubes (CNTs), carbon spheres, carbon ribbons, fullerene, activated carbon, carbon nanoballs, carbon nanohorns, carbon nanocages, carbon nanorings, carbon aerogel, and graphene.

The first fluorinated carbon nanoparticle according to the present disclosure may refer to a nanoparticle obtained by fluorinating the surface of the above-described carbon nanoparticle. Specifically, the first fluorinated carbon nanoparticle may have an excellent water-repellent effect because it contains a fluorine atom that easily forms stable chemical bonds with other elements.

For example, the first fluorinated carbon nanoparticle may be (C₂F)n, (CF)ₙ, or the like, wherein n may be an integer greater than or equal to 1. In addition, the average size of the first fluorinated carbon nanoparticles may be 50 to 400 nm, specifically 60 to 300 nm. The first fluorinated carbon nanoparticles may be produced, for example, by the reaction of fluorine gas (F₂) and carbon nanoparticles.

In some embodiments of the present disclosure, the content of fluorine in the first fluorinated carbon nanoparticle may be 5 wt% or more and 90 wt% or less based on the total weight of the first fluorinated carbon nanoparticle. Specifically, the content of fluorine in the first fluorinated carbon nanoparticle may be, based on the total weight of the first fluorinated carbon nanoparticle, 5 wt% or more, 10 wt% or more, 15 wt% or more, 20 wt% or more, 25 wt% or more, or 28 wt% or more, and 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, 85 wt% or less, or 90 wt% or less. The content of fluorine may be changed by adjusting the content of fluorine gas and the content of the carbon nanoparticle. By controlling the content of fluorine within the above numerical range, it is possible to realize a membrane-electrode assembly with excellent cell output performance, water-repellent performance, and durability. Specifically, since water-repellent performance (durability) and output performance are in a trade-off relationship where increasing one performance lowers the other, the two performances that are in a trade-off relationship may be achieved simultaneously by controlling the content of fluorine. For example, the content of fluorine may be analyzed through elemental analysis using energy-dispersive X-ray spectroscopy (EDS) with a scanning electron microscope (SEM).

Meanwhile, in the present specification, the term "loading amount" may refer to the weight of functional nanoparticles per unit area of the functional surface layer. For example, the loading amount of the functional nanoparticles may be calculated by measuring the weight of a test sample consisting of the catalyst layer and the functional surface layer and the weight of a reference sample consisting of the catalyst layer, respectively. For example, the loading amount of the functional nanoparticles may be changed by adjusting the content of functional nanoparticles in a composition for forming the functional surface layer to be described below.

In some embodiments of the present disclosure, the loading amount of the first fluorinated carbon nanoparticles in the functional surface layer 30 may be 0.03 mg/cm² or more and 1.0 mg/cm² or less. Specifically, the loading amount of the first fluorinated carbon nanoparticles is 0.05 mg/cm² or more, 0.10 mg/cm² or more, 0.15 mg/cm² or more, 0.20 mg/cm² or more, 0.25 mg/cm² or more, 0.30 mg/cm² or more, 0.35 mg/cm² or more, 0.40 mg/cm² or more, 0.50 mg/cm² or more, or 0.51 mg/cm² or more, and 0.70 mg/cm² or less, 0.75 mg/cm² or less, 0.80 mg/cm² or less, 0.85 mg/cm² or less, 0.90 mg/cm² or less, 0.95 mg/cm² or less, or 0.98 mg/cm² or less. In some embodiments of the present disclosure, the electrical conductivity, water repellency, and durability of the catalyst layer for a fuel cell may be achieved simultaneously by controlling the loading amount of the first fluorinated carbon nanoparticles within the above numerical range.

The boron nitride (BN) nanoparticle according to the present disclosure may have characteristics such as high thermal conductivity and heat resistance. The boron nitride nanoparticle may be, for example, amorphous boron nitride, cubic boron nitride (cBN), or hexagonal boron nitride (hBN). The average size of the boron nitride nanoparticles may be 50 to 400 nm, specifically 100 to 300 nm.

In some embodiments of the present disclosure, the loading amount of the boron nitride nanoparticles in the functional surface layer 30 may be 0.03 mg/cm² or more and 1.0 mg/cm² or less. Specifically, the loading amount of the boron nitride nanoparticles may be 0.05 mg/cm² or more, 0.10 mg/cm² or more, 0.15 mg/cm² or more, 0.20 mg/cm² or more, 0.25 mg/cm² or more, 0.30 mg/cm² or more, 0.35 mg/cm² or more, 0.40 mg/cm² or more, 0.50 mg/cm² or more, or 0.51 mg/cm² or more, and 0.70 mg/cm² or less, 0.75 mg/cm² or less, 0.80 mg/cm² or less, 0.85 mg/cm² or less, 0.90 mg/cm² or less, 0.95 mg/cm² or less, or 0.98 mg/cm² or less. In some embodiments of the present disclosure, as the loading amount of the boron nitride nanoparticles is controlled within the above numerical range, the electrical conductivity performance of the catalyst layer for a fuel cell and the performance of effectively dissipating heat generated during fuel cell operation may be achieved simultaneously.

In the present specification, the term "composite" may be defined as a material in which two or more materials are combined to exhibit a more effective function while forming physically or chemically different phases. Here, the combination of two or more materials may mean a physical and/or chemical combination. For example, the composite may be defined as a term distinct from a mixture in which two or more materials are not combined.

The functional surface layer 30 according to the present disclosure may include a composite including a second fluorinated carbon nanoparticle and an IrOₓ nanoparticle (where x is 1, 2 or 3), and specifically may include a composite composed of a second fluorinated carbon nanoparticle and an IrOₓ nanoparticle (where x is 1, 2 or 3). More specifically, the IrOₓ nanoparticle may be loaded on the second fluorinated carbon nanoparticle.

For example, the average size of the IrOₓ nanoparticles loaded on the second fluorinated carbon nanoparticles may be 1 to 60 nm, specifically 3 to 50 nm. The second fluorinated carbon nanoparticle may be the same as or different from the first fluorinated carbon nanoparticle. As the IrOₓ nanoparticle is loaded on the second fluorinated carbon nanoparticle that acts as a support, it is possible not only to improve the cell reversal tolerance of the membrane-electrode assembly but also to effectively prevent flooding, a phenomenon in which the electrode pores are fully filled with water, due to the inherent water-repellent properties of the fluorine atoms.

According to some embodiments of the present disclosure, x in the IrOₓ nanoparticle loaded on the second fluorinated carbon nanoparticle may be 2. IrO₂ can further improve cell reversal tolerance by effectively preventing the formation of a local hydrogen/oxygen interface on the anode side, compared to IrO and IrO₃.

According to some embodiments of the present disclosure, the loading amount of the IrOx nanoparticle may be, based on the total weight of the composite, 30 wt% or more and 75 wt% or less. Specifically, the loading amount of the IrOx nanoparticle may be 35 wt% or more, 40 wt% or more, 42 wt% or more, 44 wt% or more, 46 wt% or more, 48 wt% or more, 49 wt% or more, or 50 wt% or more, and 51 wt% or less, 52 wt% or less, 54 wt% or less, 56 wt% or less, 58 wt% or less, 60 wt% or less, 65 wt% or less, or 70 wt% or less. Here, the loading amount of the IrOₓ nanoparticle may be the content based on the total weight of the composite composed of the second fluorinated carbon nanoparticle and the IrOₓ nanoparticle. According to some embodiments of the present disclosure, as the loading amount of the IrOₓ nanoparticle is controlled within the above numerical range, it is possible not only to further improve the cell reversal tolerance of the membrane-electrode assembly, but also to more effectively prevent flooding, a phenomenon in which the electrode pores are fully filled with water, due to the inherent water-repellent properties of the fluorine atoms. For example, the loading amount of the IrOₓ nanoparticle may be analyzed by any one method selected from the group consisting of X-ray fluorescence spectrometry (XRF), inductively coupled plasma spectrometry (ICP), gravimetric analysis, and combinations thereof.

In some embodiments of the present disclosure, the loading amount of the composite included in the functional surface layer 30 may be 0.03 mg/cm² or more and 1.0 mg/cm² or less. Specifically, the loading amount of the composite may be 0.05 mg/cm² or more, 0.10 mg/cm² or more, 0.15 mg/cm² more, 0.20 mg/cm² or more, 0.25 mg/cm² or more, 0.30 mg/cm² or more, 0.35 mg/cm² or more, 0.40 mg/cm² or more, 0.50 mg/cm² or more, or 0.51 mg/cm² or more, and 0.70 mg/cm² or less, 0.75 mg/cm² or less, 0.80 mg/cm² or less, 0.85 mg/cm² or less, 0.90 mg/cm² or less, 0.95 mg/cm² or less, or 0.98 mg/cm² or less. In some embodiments of the present disclosure, as the loading amount of the composite is controlled within the numerical range, it is possible not only to improve the cell reversal tolerance of the membrane-electrode assembly while maintaining electrical conductivity at an appropriate level, but also to effectively prevent flooding, a phenomenon in which the electrode pores are fully filled with water, due to the inherent water-repellent properties of the fluorine atoms.

The fluorinated boron nitride nanoparticle according to the present disclosure may refer to a nanoparticle obtained by fluorinating the surface of a boron nitride nanoparticle. Specifically, the fluorinated boron nitride nanoparticle may have excellent water-repellent properties because it contains a fluorine atom that easily forms stable chemical bonds with other elements.

In some embodiments of the present disclosure, the loading amount of fluorinated boron nitride nanoparticles in the functional surface layer 30 may be 0.03 mg/cm² or more and 1.0 mg/cm² or less. Specifically, the loading amount of fluorinated boron nitride nanoparticles may be 0.05 mg/cm² or more, 0.10 mg/cm² or more, 0.15 mg/cm² or more, 0.20 mg/cm² or more, 0.25 mg/cm² or more, 0.30 mg/cm² or more, 0.35 mg/cm² or more, 0.40 mg/cm² or more, 0.50 mg/cm² or more, or 0.51 mg/cm² or more, and 0.70 mg/cm² or less, 0.75 mg/cm² or less, 0.80 mg/cm² or less, 0.85 mg/cm² or less, 0.90 mg/cm² or less, 0.95 mg/cm² or less, or 0.98 mg/cm² or less. In some embodiments of the present disclosure, as the loading amount of the fluorinated boron nitride nanoparticles is controlled within the above numerical range, the electrical conductivity, water repellency, and durability of the catalyst layer for a fuel cell may be achieved simultaneously.

For example, the average size of the fluorinated boron nitride nanoparticles may be 50 to 400 nm, specifically 100 to 300 nm. For example, the fluorinated boron nitride nanoparticles may be produced by the reaction of fluorine gas (F₂) and boron nitride nanoparticles.

In some embodiments of the present disclosure, the content of fluorine in the fluorinated boron nitride nanoparticle may be 5 wt% or more and 90 wt% or less based on the total weight of the fluorinated boron nitride nanoparticle. Specifically, the content of fluorine may be, based on the total weight of the fluorinated boron nitride nanoparticle, 5 wt% or more, 10 wt% or more, 15 wt% or more, 20 wt% or more, 25 wt% or more, or 28 wt% or more, and 30 wt% or less, 35 wt% or less, 40 wt% or less, 45 wt% or less, 50 wt% or less, 55 wt% or less, 60 wt% or less, 65 wt% or less, 70 wt% or less, 75 wt% or less, 80 wt% or less, 85 wt% or less, or 90 wt% or less. The content of fluorine may be changed by adjusting the content of fluorine gas and the content of the boron nitride nanoparticle, but when the content of fluorine satisfies the above numerical range, it is possible to realize a membrane-electrode assembly with excellent cell output performance, water-repellent performance, and durability. For example, the content of fluorine may be analyzed by elemental analysis using energy-dispersive X-ray spectroscopy (EDS) with a scanning electron microscope (SEM).

The thickness of the functional surface layer 30 according to the present disclosure may be 0.2 µm or more and 2.0 µm or less. Specifically, the thickness of the functional surface layer 30 may be 0.3 µm or more, 0.5 µm or more, 0.7 µm or more, 0.9 µm or more, or 1.0 µm or more; and 1.5 µm or less, 1.8 µm or less, or 2.0 µm or less. When the thickness of the functional surface layer 30 satisfies the above numerical range, it is possible to provide a catalyst layer for a fuel cell that has excellent durability even when the fuel cell is operated for a long period of time, and to further increase water repellency in the fuel cell, thereby effectively preventing flooding, a phenomenon in which the electrode pores are fully filled with water, and also to increase thermal conductivity, thereby more effectively dissipating heat generated during fuel cell operation. For example, in the case in which the surface of the functional surface layer 30 is not flat because the particles in the functional surface layer form a cluster structure, the thickness of the functional surface layer may be the average of the maximum and minimum thicknesses of the functional surface layer in a vertical cross-sectional view of the functional surface layer. For example, the thickness of the functional surface layer may be measured using a scanning electron microscope or a transmission electron microscope.

According to one embodiment of the present disclosure, the functional surface layer 30 may cover 20% or more and 80% or less of the total active area of one surface of the catalyst layer for a fuel cell. Specifically, the functional surface layer 30 may cover 20% or more, 25% or more, 30% or more, 35% or more, 40% or more, 45% or more, 50% or more, 55% or more, or 60% or more, and 65% or less, 70% or less, 75% or less, or 80% or less of the total active area of one surface of the catalyst layer for a fuel cell. As the area occupied by the functional surface layer 30 is controlled within the above numerical range based on the total active area, the electrical conductivity may be achieved at an appropriate level, and at the same time, the effect of each functional nanoparticle may be achieved. Here, the "total active area" is the area where the electrochemical reaction of the catalyst layer for a fuel cell occurs, and may be quantitatively measured, for example, by cyclic voltammetry (CV). For example, one surface of the catalyst layer for a fuel cell, the total active area of which serves as a basis, may be a surface opposite to the surface through which the polymer electrolyte membrane 10 and the catalyst layer 20 for a fuel cell come into contact with each other.

According to another embodiment of the present disclosure, the functional surface layer 30 may be formed by applying a composition for forming the functional surface layer to one or both surfaces of a commercial membrane-electrode assembly by a spray method or a slot-die coating method, followed by a drying step. Specifically, the functional surface layer may be formed by applying the composition to one or both surfaces of the catalyst layer by a spray method or a slot-die coating method, followed by a drying step. The reason for using the spray method or the slot-die coating method is that it minimizes deformation of the manufactured membrane-electrode assembly and allows for easy and rapid manufacturing. For example, if the functional nanoparticle is the composite, the catalyst layer may be an anode.

According to one embodiment of the present disclosure, a composition for forming the functional surface layer may contain a dispersion medium and at least one functional nanoparticle selected from the group consisting of a first fluorinated carbon nanoparticle, a boron nitride nanoparticle, and a fluorinated boron nitride nanoparticle. The content of at least one functional nanoparticle selected from the group consisting of a first fluorinated carbon nanoparticle, a boron nitride nanoparticle, and a fluorinated boron nitride nanoparticle may be, based on the total weight of the composition for forming the functional surface layer, 2 to 25 wt%, specifically 3 to 20 wt%, more specifically 4 to 15 wt%. When the content of the selected at least one functional nanoparticle satisfies the above numerical range, it is possible to provide a catalyst layer for a fuel cell that has excellent durability even when the fuel cell is operated for a long period of time, and to further increase water repellency in the fuel cell, thereby effectively preventing flooding, a phenomenon in which the electrode pores are fully filled with water, and also to increase thermal conductivity, thereby more effectively dissipating heat generated during fuel cell operation.

The dispersion medium may be used for the purpose of uniformly dispersing functional nanoparticles. The solvent (dispersion medium) may be appropriately selected depending on the type of functional nanoparticle, but may include, for example, any one selected from the group consisting of water, alcohols, and mixtures thereof.

The catalyst layer 20 according to the present disclosure may be a catalyst layer commonly used in the art, which is a portion of the catalyst layer CL for a fuel cell. Specifically, the catalyst layer 20 may include a platinum-based metal and/or a non-platinum-based metal, which participates in the cell reaction.

For example, the platinum-based metal may include one selected from the group consisting of platinum (Pt), palladium (Pd), ruthenium (Ru), iridium (Ir), osmium (Os), a platinum-M alloy, a non-platinum alloy, and combinations thereof. More preferably, it may be a combination of two or more metals selected from the group consisting of the above-described platinum-based catalyst metals, without being limited thereto, and any platinum-based catalyst metal may be used without limitation as long as it may be used in the art. Here, M may correspond to one or more selected from the group consisting of, for example, palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh). Specifically, the platinum-M alloy may be one or a mixture of two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr-Ir, and combinations thereof.

The non-platinum alloy may be one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and combinations thereof.

The catalyst used in the catalyst layer may be the catalyst itself or may be supported on a carrier. The carrier may be, for example, one selected from the group consisting of a carbon-based carrier, porous inorganic oxide, zeolite, and combinations thereof. The carbon-based carrier may be, for example, at least one selected from the group consisting of graphite, Super P, carbon fibers, carbon sheets, carbon black, ketjen black, denka black, acetylene black, carbon nanotubes (CNTs), carbon spheres, carbon ribbons, fullerenes, activated carbon, carbon nanofibers, carbon nanowires, carbon nanoballs, carbon nanohorns, carbon nanocages, carbon nanorings, carbon aerogel, graphene, stabilized carbon, activated carbon, and combinations thereof, without being limited thereto. The porous inorganic oxide may be, for example, at least one selected from the group consisting of zirconia, alumina, titania, silica, and ceria. The surface area of the carrier may preferably be 50 m²/g or more, and the average particle diameter thereof may be 10 to 300 nm. If the surface area of the carrier is less than the lower limit of the above numerical range, a uniform distribution of metal nanoparticles may not be obtained.

### 2. Membrane-Electrode Assembly

Fig. 2 is a cross-sectional view of a membrane-electrode assembly according to one embodiment of the present disclosure.

Referring to Fig. 2, a membrane-electrode assembly 100 according to one embodiment of the present disclosure may include a polymer electrolyte membrane 10 and a catalyst layer CL for a fuel cell disposed on at least one surface of the polymer electrolyte membrane 10.

A catalyst layer 20 according to the present disclosure may include a first catalyst layer 20a and a second catalyst layer 20b. The first catalyst layer 20a and the second catalyst layer 20b may be opposite to each other with the polymer electrolyte membrane 10 interposed therebetween. Any one of the first catalyst layer 20a and the second catalyst layer 20b may be an anode and the other may be a cathode. According to one embodiment of the present disclosure, the functional surface layer 30 may be disposed on the surface of any one selected from among the first catalyst layer and the second catalyst layer.

Fig. 3 is a cross-sectional view of a membrane-electrode assembly according to another embodiment of the present disclosure. Parts overlapping with the above-described parts will be briefly described or omitted.

Referring to Fig. 3, the functional surface layer 30 according to the present disclosure may include a first functional surface layer 30a and a second functional surface layer 30b. Specifically, the first functional surface layer 30a may be disposed on one surface of the first catalyst layer 20a, and the second functional surface layer 30b may be disposed on one surface of the second catalyst layer 20b.

Meanwhile, as an example, the temperature of oxygen gas supplied to the cathode during the operation of a fuel-cell unit cell may be controlled to be higher than the temperature of hydrogen gas supplied to the anode. At this time, if the temperature of the oxygen gas is controlled to be higher, the water generated in the fuel cell may be effectively removed. For example, the second functional surface layer 30b may be in contact with the cathode, which is the second catalyst layer 20b, and the first functional surface layer 30a may be in contact with the anode, which is the first catalyst layer 20a.

In some embodiments of the present disclosure, the thickness of the second functional surface layer 30b may be greater than the thickness of the first functional surface layer 30a. In some embodiments of the present disclosure, as the thickness of the second functional surface layer is controlled to be greater than the thickness of the first functional surface layer, the oxygen gas reduction reaction may proceed stably without structural deformation even at high operating temperatures of the fuel cell.

In some embodiments of the present disclosure, the loading amount of the first fluorinated carbon nanoparticles in the second functional surface layer 30b may be larger than the loading amount of the first fluorinated carbon nanoparticles in the first functional surface layer 30a. According to some embodiments of the present disclosure, as the loading amount of the first fluorinated carbon nanoparticles in the second functional surface layer 30b is controlled to be larger than the loading amount of the first fluorinated carbon nanoparticles in the first functional surface layer 30a, water-repellent performance (durability) and output performance, which are in a trade-off relationship, may be achieved simultaneously.

In some embodiments of the present disclosure, the loading amount of boron nitride nanoparticles in the second functional surface layer 30b may be larger than the loading amount of boron nitride nanoparticles in the first functional surface layer 30a. According to some embodiments of the present disclosure, as the loading amount of boron nitride nanoparticles in the second functional surface layer 30b is controlled to be larger than the loading amount of boron nitride nanoparticles in the first functional surface layer 30a, it is possible to simultaneously achieve the electrical conductivity performance of the catalyst layer for a fuel cell and the performance of effectively dissipating heat generated during fuel cell operation.

In some embodiments of the present disclosure, the loading amount of fluorinated boron nitride nanoparticles in the second functional surface layer 30b may be higher than the loading amount of fluorinated boron nitride nanoparticles in the first functional surface layer 30a. According to some embodiments of the present disclosure, as the loading amount of fluorinated boron nitride nanoparticles in the second functional surface layer 30b is controlled to be higher than the loading amount of fluorinated boron nitride nanoparticles in the first functional surface layer 30a, it is possible to simultaneously achieve water-repellent performance (durability) and output performance, which are in a trade-off relationship.

The first functional surface layer 30a and the second functional surface layer 30b according to the present disclosure may each independently include at least one functional nanoparticle selected from the group consisting of fluorinated carbon nanoparticles, boron nitride nanoparticles, and fluorinated boron nitride nanoparticles. Accordingly, the types of functional nanoparticles included in the first functional surface layer 30a and the second functional surface layer 30b may be the same as or different from each other.

According to another embodiment of the present disclosure, there may be provided a membrane-electrode assembly wherein the catalyst layer for a fuel cell may include a first catalyst layer disposed on one surface of the polymer electrolyte membrane, and the functional surface layer may include a first functional surface layer disposed on one surface of the first catalyst layer, wherein the first functional surface layer may include the composite, and the first catalyst layer may be an anode. When the composite is used, it is possible to improve cell reversal tolerance by effectively preventing the carbon carrier from being corroded by water on the anode side when the cell reversal phenomenon in which the cell voltage changes to a negative value while the anode potential increases and the cathode potential remains in the initial state is caused by hydrogen starvation.

In some embodiments of the present disclosure, when hydrogen (100% RH) and air (100% RH) are supplied to the anode and cathode, respectively, in stoichiometric amounts corresponding to 1.5/2.0 at 80°C using a fuel-cell unit cell evaluation device, the current density at 0.6 V of the unit cell including the membrane-electrode assembly may be 1,000 mA/cm² or more, 1,100 mA/cm² or more, or 1,200 mA/cm² or more based on the output performance (End of Life, EOL) obtained by performing 20,000 cycles using the DOE catalyst durability evaluation protocol, and specifically, may be any one of the plurality of lower limits and 2,000 mA/cm² or less.

In some embodiments of the present disclosure, when air with 50% RH and nitrogen with 50% RH are supplied to the cathode and the anode, respectively, and a current of 0.2 A/cm² is applied, the time taken for a unit cell including the membrane-electrode assembly to reach -2.0 V (cell reversal time) may be 5 minutes or more, 10 minutes or more, 20 minutes or more, 30 minutes or more, 40 minutes or more, 50 minutes or more, 60 minutes or more, 70 minutes or more, 100 minutes or more, 110 minutes or more, 120 minutes or more, 130 minutes or more, 140 minutes or more, 150 minutes or more, 170 minutes or more, 180 minutes or more, or 187 minutes or more, and specifically, may be any one of the plurality of lower limits and 200 minutes or less.

In some embodiments of the present disclosure, after a water droplet (10 µL/s) is dropped onto the surface of the membrane-electrode assembly under room temperature conditions using a contact angle measuring instrument, the contact angle of the dropped water droplet may be 100° or more, 110° or more, 120° or more, 125° or more, 126° or more, 133° or more, 139° or more, or 147° or more, and specifically, may be between any one or more of the plurality of lower limits and 150° or less. The polymer electrolyte membrane 10 according to the present disclosure may be in the form of a single membrane or reinforced composite membrane commonly used in the art.

The polymer electrolyte membrane 10 according to one embodiment of the present disclosure may include an ionomer. Specifically, the ionomer may be any one selected from the group consisting of a fluorinated ionomer, a hydrocarbon-based ionomer, and mixtures thereof.

The fluorinated ionomer is, for example, a fluorinated polymer containing fluorine in the main chain, and may be any one selected from the group consisting of poly(perfluorosulfonic acid), poly(perfluorocarboxylic acid), a copolymer of tetrafluoroethylene and fluorovinyl ether containing a sulfonic acid group, a polystyrene-graft-ethylene-tetrafluoroethylene copolymer, a polystyrene-graft-polytetrafluoroethylene copolymer, and mixtures thereof.

The hydrocarbon-based ionomer may be, for example, any one selected from the group consisting of sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and mixtures thereof.

The polymer electrolyte membrane 10 according to another embodiment of the present disclosure may be a reinforced composite membrane in which a porous support is impregnated with an ion conductor. The ion conductor may be the same as or different from the ionomer described above.

The porous support according to the present disclosure may be a fluorinated support or a nanoweb support. Specifically, the fluorinated support may be, for example, expanded polytetrafluoroethylene (e-PTFE) having a microstructure of polymer fibrils or a microstructure in which nodes are connected to each other by fibrils. Additionally, a film having a microstructure of polymer fibrils in which nodes are not present may also be used as the porous support.

The fluorinated support may include a perfluorinated polymer. The porous support may be a more porous and stronger porous support obtained by extruding dispersion-polymerized PTFE into a tape in the presence of a lubricant and stretching the resulting material. In addition, the amorphous content of the PTFE may be increased by heat-treating the e-PTFE at a temperature higher than the melting point (about 342°C) of the PTFE. The e-PTFE film produced by the above-described method may have micropores with various diameters and porosity. The e-PTFE film produced by the above-described method may have a porosity of at least 35%, and the diameter of the micropores may be about 0.01 to 1 µm.

The nanoweb support according to one embodiment of the present disclosure may be a non-woven fibrous web composed of a plurality of randomly oriented fibers. The non-woven fibrous web refers to a sheet having a structure of individual fibers or filaments, which are interlaid, but not in the same repeating manner as a woven fabric. The non-woven fibrous web may be formed by any one method selected from the group consisting of carding, garneting, air-laying, wet-laying, melt blowing, spun bonding, and stitch bonding. The fibers may include at least one polymer material, and any material that is generally used as a fiber-forming polymer material may be used. Specifically, a hydrocarbon-based fiber-forming polymer material may be used. For example, the fiber-forming polymer material may include any one selected from the group consisting of polyolefins, such as polybutylene, polypropylene, and polyethylene; polyesters, such as polyethylene terephthalate and polybutylene terephthalate; polyamides (nylon-6 and nylon-6,6); polyurethane polybutene; polylactic acid; polyvinyl alcohol; polyphenylene sulfide; polysulfone; fluid crystalline polymers; polyethylene-co-vinyl acetate; polyacrylonitrile; cyclic polyolefins; polyoxymethylene; polyolefin-based thermoplastic elastomers; and combinations thereof. However, the technical concept of the present disclosure is not limited thereto.

The nanoweb support according to one embodiment of the present disclosure may be a support in which nanofibers are integrated in the form of a nonwoven fabric having a plurality of pores. The nanofibers may preferably include a hydrocarbon-based polymer that exhibits excellent chemical resistance and has hydrophobicity so as not to be deformed in shape due to moisture in a high-humidity environment. Specifically, the hydrocarbon-based polymer may be selected from the group consisting of nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, copolymers thereof, and mixtures thereof, and among them, polyimide, which has better heat resistance, chemical resistance, and shape stability, may be preferably used.

The nanoweb support is an aggregate of nanofibers in which nanofibers formed by electrospinning are randomly arranged. In this case, considering the porosity and thickness of the nanoweb, the nanofibers preferably have an average diameter of 40 to 5,000 nm as calculated by measuring the diameters of 50 fibers using a scanning electron microscope (JSM6700F, JEOL) and averaging the diameters. If the average diameter of the nanofibers is less than the lower limit of the above numerical range, the mechanical strength of the porous support may decrease, and if the average diameter of the nanofibers is more than the upper limit of the above numerical range, the porosity may significantly decrease and the thickness may increase.

The thickness of the non-woven fibrous web may be 10 to 50 µm, specifically 15 to 43 µm. If the thickness of the non-woven fibrous web is less than the lower limit of the above numerical range, the mechanical strength may decrease, and if the thickness is more than the upper limit of the above numerical range, the resistance loss may increase and the lightweighting and integration may decrease. The non-woven fibrous web may have a basic weight of 5 to 30 mg/cm². If the basic weight of the non-woven fibrous web is less than the lower limit of the above numerical range, visible pores may be formed, making the web difficult to function as a porous support, and if the basic weight is more than the upper limit of the above numerical range, the web may be manufactured in the form of paper or fabric in which pores are hardly formed.

The porosity of the porous support according to the present disclosure may be 30 to 90%, preferably 60 to 85%. If the porosity of the porous support is less than the lower limit of the above numerical range, a problem may arise in that impregnation with the ion conductor may decrease, and if the porosity is more than the upper limit of the above numerical range, shape stability may decrease, and thus a subsequent process may not proceed smoothly. The porosity may be calculated by the ratio of the volume of air in the porous support to the total volume of the porous support according to Equation 1 below. At this time, the total volume is calculated by preparing a rectangular sample and measuring the width, length, and thickness of the sample, and the volume of air may be obtained by measuring the mass of the sample and then subtracting the volume of the polymer, inversely calculated from the density, from the total volume. [Equation 1] 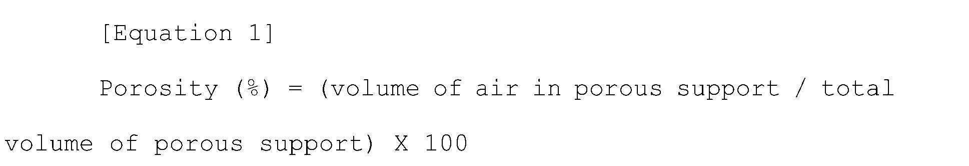 Porosity (%) = (volume of air in porous support/total volume of porous support) × 100

### 3. Fuel Cell

Another embodiment of the present disclosure may provide a fuel cell including the membrane-electrode assembly.

Fig. 4 is a schematic view illustrating a fuel cell according to one embodiment of the present disclosure.

Referring to Fig. 4, a fuel cell 200 according to the present disclosure may include: a fuel supply unit 210 configured to supply a mixed fuel composed of fuel and water; a reforming unit 220 configured to reform the mixed fuel to generate a reformed gas containing hydrogen gas; a stack 230 configured to generate electrical energy by inducing an electrochemical reaction between the reformed gas containing hydrogen gas supplied from the reforming unit 220 and an oxidant; and an oxidant supply unit 240 configured to supply an oxidant to the reforming unit 220 and the stack 230.

The stack 230 may have a plurality of unit cells that generate electrical energy by inducing an oxidation/reduction reaction between a reformed gas containing hydrogen gas supplied from the reforming unit 220 and an oxidant supplied from the oxidant supply unit 240.

Each unit cell means a unit cell that generates electricity, and may include a membrane-electrode assembly that oxidizes/reduces a reformed gas containing hydrogen gas and the oxygen of the oxidant, and separator plates (also called bipolar plates, hereinafter referred to as "separator plates") for supplying the reformed gas containing hydrogen gas and the oxidant to the membrane-electrode assembly. The separator plates are disposed on both sides of the membrane-electrode assembly. At this time, the separator plates located at the outermost sides of the stack, respectively, are also specifically referred to as end plates.

Among the separator plates, one end plate may include a pipe-shaped first supply tube 231 for injecting a reformed gas containing hydrogen gas supplied from the reforming unit 220, and a pipe-shaped second supply tube 232 for injecting oxygen gas, and the other end plate may include a first discharge tube 233 for discharging the remaining unreacted reformed gas containing hydrogen gas from the plurality of unit cells to the outside, and a second discharge tube 234 for discharging the remaining unreacted oxidant from the unit cells to the outside.

In the above-described fuel cell, the separator, fuel supply unit, and oxidant supply unit constituting the electricity generation unit are those used in conventional fuel cells, and thus detailed description thereof will be omitted herein.

### Mode for Invention

Hereinafter, examples of the present disclosure will be described in more detail so that a person skilled in the art to which the present disclosure pertains can easily carry out the present disclosure. However, this is nothing but a mere example, and the scope of rights of the present disclosure is not limited by the following contents.

### [Preparation Example 1: Preparation of materials]

### 1) Fluorinated carbon nanoparticles

Fluorinated carbon nanoparticles (D₅₀=65 nm) having a fluorine content of 30% based on the total weight of the fluorinated carbon nanoparticle were prepared by plasma treatment of commercial carbon black (Vulcan XC-72). For the plasma treatment, a mixed gas consisting of 10 vol% fluorine-containing gas and 90 vol% diluent gas was injected at atmospheric pressure and allowed to react for 5 minutes at a power of 200 W.

### 2) Boron nitride nanoparticles

Commercial B₂O₃ powder was processed using a high-energy ball mill at a speed of 700 rpm for 100 minutes under nitrogen gas, and then heat-treated at 1,200°C for 6 hours while introducing ammonia gas at a flow rate of 150 ml/min, thereby preparing boron nitride nanoparticles with an average particle diameter (D₅₀) of 150 nm.

### 3) Fluorinated boron nitride nanoparticles

Fluorinated boron nitride nanoparticles (D₅₀=160 nm) were prepared by plasma treatment of the boron nitride nanoparticles. For the plasma treatment, a mixed gas consisting of 10 vol% fluorine-containing gas and 90 vol% diluent gas was injected at atmospheric pressure and allowed to react for 5 minutes at a power of 200 W. The content of fluorine was 30 wt% based on the total weight of the fluorinated boron nitride nanoparticle.

### 4) Composite (IrOₓ nanoparticle-loaded fluorinated carbon nanoparticles)

1 part by weight of the fluorinated carbon nanoparticles as a carrier was mixed with 1 part by weight of an Ir precursor (H₂IrCl₆) in an aqueous solution, and then 100 parts by weight of water and 10 parts by weight of ammonia water were added to the mixture which was then dispersed, thereby preparing a dispersion. The dispersion was stirred for about 6 hours, and then the water was removed by evaporation to obtain powder. Thereby, a composite containing IrO₂ nanoparticles with an average particle diameter (D₅₀) of 6 nm loaded on fluorinated carbon nanoparticles with an average particle diameter (D₅₀) of 100 nm was prepared. At this time, the loading amount of IrO₂ in the composite was 50 wt% based on the total weight of the composite, and was measured by X-ray fluorescence spectrometry (XRF).

### [Preparation Example 2: Preparation of composition for forming functional surface layer]

### <Preparation Example 2-1: Composition containing fluorinated carbon nanoparticles>

A composition containing fluorinated carbon nanoparticles was prepared by mixing a 50% (v/v) ethanol aqueous solution and fluorinated carbon nanoparticles at a weight ratio of 88:12.

### <Preparation Example 2-2: Composition containing boron nitride nanoparticles>

A composition was prepared by mixing a 50% (v/v) ethanol aqueous solution and boron nitride nanoparticles at a weight ratio of 88:12.

### <Preparation Example 2-3: Composition containing fluorinated boron nitride nanoparticles>

A composition was prepared by mixing a 50% (v/v) ethanol aqueous solution and fluorinated boron nitride nanoparticles at a weight ratio of 88:12.

### <Preparation Example 2-4: Composition containing composite>

A composition was prepared by mixing a 50% (v/v) ethanol aqueous solution and a composite (IrOₓ (x=2) nanoparticle-loaded fluorinated carbon nanoparticles) at a weight ratio of 94:6.

### [Manufacture Example 1: Manufacture of membrane-electrode assembly]

### <Comparative Example 1: Commercial membrane-electrode assembly>

### Step (a): Preparation of polymer electrolyte membrane

A polymer electrolyte membrane was prepared through a step of applying a polymer solution of perfluorosulfonic acid in a 1:1 (w/w) solvent mixture of water and isopropanol to a glass substrate using a doctor blade, and a step of heating the applied polymer solution slowly to 80°C, followed by drying for 4 hours.

### Step (b): Manufacture of membrane-electrode assembly

A commercial Pt/C catalyst (10 g) from Tanaka Corporation was placed in a reaction vessel and mixed with a solvent, thereby preparing a slurry. Based on 100 parts by weight of the catalyst (solid content), 45 parts by weight of an ion conductor dispersion (Nafion D-521) as a binder was added to the slurry, thereby preparing an electrode slurry. Both surfaces of the polymer electrolyte membrane were directly coated with the electrode slurry, thereby manufacturing a commercial membrane-electrode assembly including a catalyst layer.

### <Example 1: Membrane-electrode assembly having functional surface layer including fluorinated carbon nanoparticles>

One surface of the first catalyst layer (anode) in the membrane-electrode assembly of Comparative Example 1 was coated with the composition of Preparation Example 2-1 by a spray method, followed by drying at 80°C for 3 minutes, thereby forming a first functional surface layer (loading amount of fluorinated carbon nanoparticles: about 0.51 mg/cm², thickness: 1.0 µm) with an area of 60% of the total active area. Next, one surface of the second catalyst layer (cathode) in the membrane-electrode assembly of Comparative Example 1 was coated with the composition of Preparation Example 2-1 by a spray method, followed by drying at 80°C for 3 minutes, thereby forming a second functional surface layer (loading amount of fluorinated carbon nanoparticles: about 0.70 mg/cm², thickness: 1.5 µm) with an area of 60% of the total active area of the second catalyst layer. Here, the loading amount of fluorinated carbon nanoparticles in each functional surface layer was calculated by measuring the change in weight of the sample between before and after loading with the fluorinated carbon nanoparticles.

### <Example 2: Membrane-electrode assembly having functional surface layer including boron nitride nanoparticles>

A membrane-electrode assembly was manufactured in the same manner as in Example 1, except that the composition of Preparation Example 2-2 was used instead of the composition of Preparation Example 2-1. At this time, the loading amount of the boron nitride nanoparticles, the thicknesses of the first and second functional surface layers, and the occupied area of each of the first and second functional surface layers relative to the total active area were controlled in the same manner as in Example 1.

### <Example 3: Membrane-electrode assembly having functional surface layer including fluorinated boron nitride nanoparticles>

A membrane-electrode assembly was manufactured in the same manner as in Example 1, except that the composition of Preparation Example 2-3 was used instead of the composition of Preparation Example 2-1. At this time, the loading amount of the fluorinated boron nitride nanoparticles, the thicknesses of the first and second functional surface layers, and the occupied area of each of the first and second functional surface layers relative to the total active area were controlled in the same manner as in Example 1.

### <Example 4: Membrane-electrode assembly having functional surface layer including composite on surface of anode electrode>

One surface of the first catalyst layer (anode) in the membrane-electrode assembly of Comparative Example 1 was coated with the composition of Preparation Example 2-4 by a spray coating method, followed by drying at 80°C for 3 minutes, thereby forming a first functional surface layer (loading amount of the composite: about 0.51 mg/cm², thickness: 1.0 µm). At this time, the occupied area of the first functional surface layer was controlled to 60% of the total active area.

### [Experimental Example 1: SEM images and schematic views]

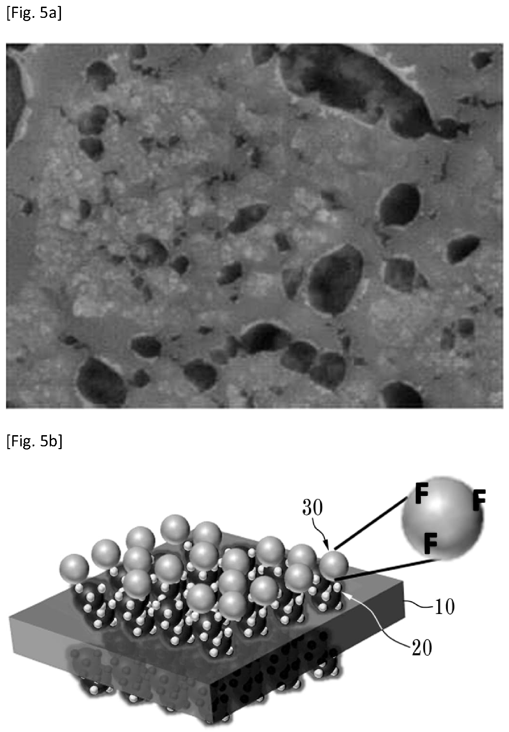

Fig. 5A is a scanning electron microscope (SEM) image of the surface of the membrane-electrode assembly manufactured according to Example 1, and Fig. 5B is a schematic view of Fig. 5A.

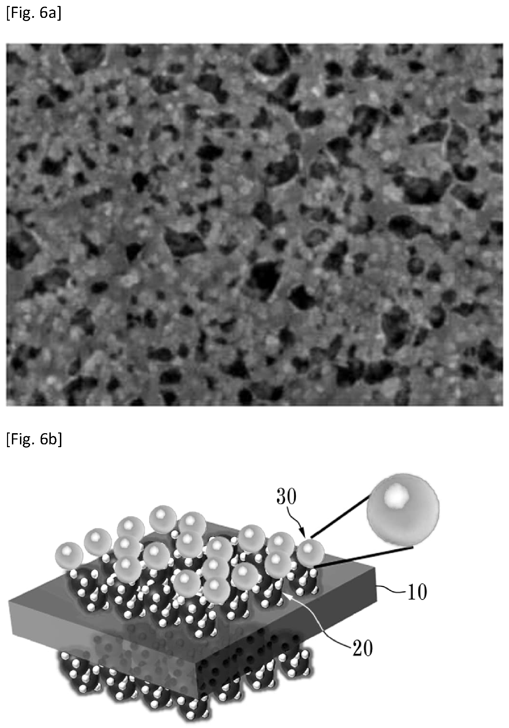

Fig. 6A is a scanning electron microscope (SEM) image of the surface of the membrane-electrode assembly manufactured according to Example 2, and Fig. 6B is a schematic view of Fig. 6A.

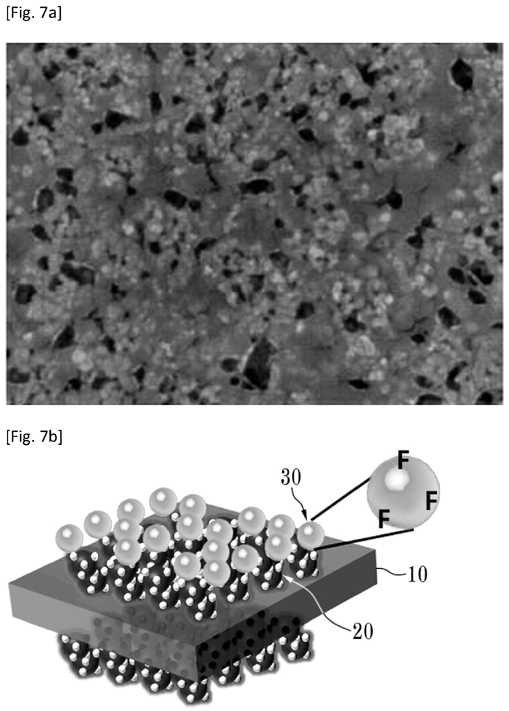

Fig. 7A is a scanning electron microscope (SEM) image of the surface of the membrane-electrode assembly manufactured according to Example 3, and Fig. 7B is a schematic view of Fig. 7A.

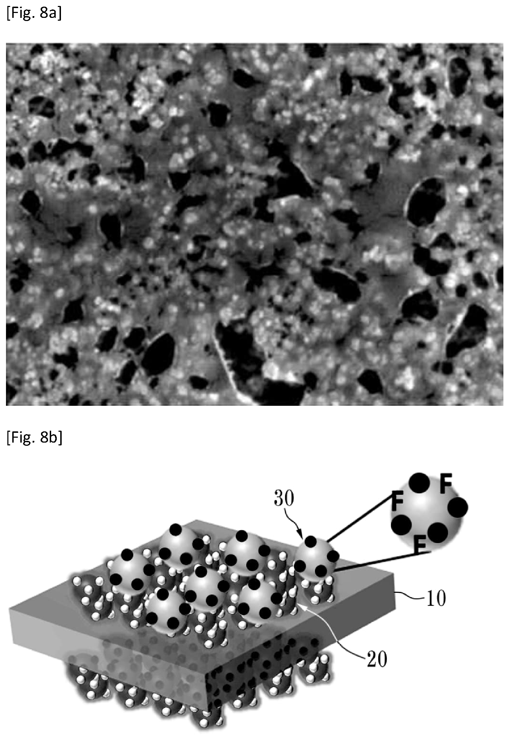

Fig. 8A is a scanning electron microscope (SEM) image of the surface of the membrane-electrode assembly manufactured according to Example 4, and Fig. 8B is a schematic view of Fig. 8A.

Referring to Figs. 5 to 8, it can be confirmed that the functional surface layer was well introduced on the surface of the membrane-electrode assembly of each of Examples 1 to 4. Specifically, referring to Figs. 5B, 6B, 7B and 8B, the catalyst layer 20 may be disposed on one surface of the polymer electrolyte membrane 10, and the functional surface layer 30 may be disposed on one surface of the catalyst layer.

### [Experimental Example 2: Evaluation of cell output performance of membrane-electrode assembly]

The output performance of the membrane-electrode assembly according to Manufacture Example 1 was evaluated through I-V measurement. Specifically, to evaluate the output performance under actual fuel cell operating conditions, a fuel-cell unit cell evaluation device (Scribner 850 fuel cell test system) including the membrane-electrode assembly was used. Under conditions of 80°C, hydrogen (100% RH) and air (100% RH) were supplied to the anode and cathode, respectively, in stoichiometric amounts corresponding to 1.5/2.0. Current density was measured at voltages ranging from 0.3 to 1.0 V, and higher current density values indicate better output performance. At this time, to evaluate durability performance, 20,000 cycles were performed using the DOE catalyst durability evaluation protocol.

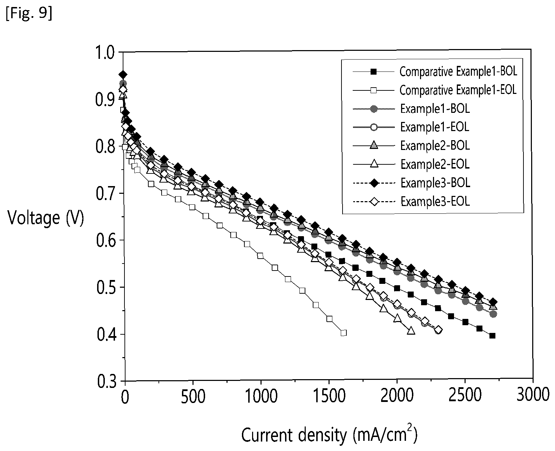

Fig. 9 shows the results of evaluating the performance of the membrane-electrode assemblies, manufactured according to the Comparative Example and the Examples, at the beginning of life (BOL) and the end of life (EOL).

Referring to FIG. 9, it was confirmed that the membrane-electrode assemblies of Examples 1 to 3 had better output performance than the membrane-electrode assembly of Comparative Example 1 at both the beginning of life (BOL) and the end of life (EOL).

### [Experimental Example 3: Evaluation of Cell reversal Tolerance]

A cell reversal test was used to evaluate the cell reversal tolerance of the membrane-electrode assembly of Example 4. Specifically, air at 50% RH was supplied to the cathode, nitrogen with 50% RH was supplied to the anode, and the cell reversal time, which is the time taken to reach - 2.0 V, was measured while applying a current of 0.2 A/cm². Referring to Table 1 below, Example 4, which has the functional surface layer including the composite of fluorinated carbon nanoparticles and IrOₓ (x=2) nanoparticles, had a longer cell reversal time than Comparative Example 1, indicating better cell reversal tolerance.

**[Table 1]**

| Sample | Time (min) to reach -2.0 V |
|---|---|
| Comparative Example 1 | 3 |
| Example 4 | 187 |

### [Experimental Example 4: Evaluation of Water-repellent performance]

Using a contact angle measuring instrument (instrument name: KRUSS DSA25), water-repellent performance was evaluated by dropping a water droplet (10 µL/s) onto the surface of the membrane-electrode assembly of Manufacture Example 1 under room temperature conditions and then measuring the contact angle of the dropped droplet.

**[Table 2]**

| Sample | Contact angle (°) |
|---|---|
| Comparative Example 1 | 95 |
| Example 1 | 139 |
| Example 2 | 126 |
| Example 3 | 147 |
| Example 4 | 133 |

Referring to Table 2 above, it can be seen that Examples 1 to 4, which have the water-repellent functional layer on their surface, show a larger contact angle than Comparative Example 1, suggesting that they have excellent water-repellent performance. Although the preferred embodiments of the present disclosure have been described in detail above, the scope of the present disclosure is not limited thereto, and various modifications and improvements made by those skilled in the art using the basic concepts of the present disclosure as defined in the appended claims also fall within the scope of the present disclosure.

### [Description of Reference Numerals]

| | | | |
|---|---|---|---|
| CL: | catalyst layer for fuel cell | 10: | polymer electrolyte membrane |
| 20: | catalyst layer | 20a: | first catalyst layer |
| 20b: | second catalyst layer | 30: | functional surface layer |
| 30a: | first functional surface layer | 30b: | second functional surface layer |
| 100: | membrane-electrode assembly | | |

## Claims

1. A catalyst layer for a fuel cell, comprising:
a catalyst layer; and
a functional surface layer disposed on at least one surface of the catalyst layer,
wherein the functional surface layer comprises at least one functional nanoparticle selected from the group consisting of: a first fluorinated carbon nanoparticle; a boron nitride nanoparticle; a composite comprising a second fluorinated carbon nanoparticle and an IrOₓ nanoparticle (where x is 1, 2, or 3); and a fluorinated boron nitride nanoparticle.

2. The catalyst layer for a fuel cell according to claim 1, wherein a content of fluorine in the first fluorinated carbon nanoparticle is 5 wt% or more and 90 wt% or less based on a total weight of the first fluorinated carbon nanoparticle.

3. The catalyst layer for a fuel cell according to claim 1, wherein a content of fluorine in the fluorinated boron nitride nanoparticle is 5 wt% or more and 90 wt% or less based on a total weight of the fluorinated boron nitride nanoparticle.

4. The catalyst layer for a fuel cell according to claim 1, wherein the functional surface layer has a thickness of 0.2 µm or more and 2.0 µm or less.

5. The catalyst layer for a fuel cell according to claim 1, wherein the functional surface layer covers 20% or more and 80% or less of a total active area of one surface that is in contact with the catalyst layer.

6. The catalyst layer for a fuel cell according to claim 1, wherein the IrOₓ nanoparticle (where x is 1, 2, or 3) is loaded on the second fluorinated carbon nanoparticle, and a loading amount of the IrOₓ nanoparticle is 30 wt% or more and 75 wt% or less based on a total weight of the composite.

7. The catalyst layer for a fuel cell according to claim 1, wherein a loading amount of the functional nanoparticle is 0.03 mg/cm² or more and 1.0 mg/cm² or less.

8. A membrane-electrode assembly comprising:
a polymer electrolyte membrane; and
the catalyst layer for a fuel cell according to claim 1 disposed on at least one surface of the polymer electrolyte membrane.

9. The membrane-electrode assembly according to claim 8,
wherein the catalyst layer for a fuel cell comprises a first catalyst layer disposed on one surface of the polymer electrolyte membrane, and
wherein the functional surface layer comprises a first functional surface layer disposed on one surface of the first catalyst layer,
wherein the first functional surface layer comprises the composite, and
wherein the first catalyst layer is an anode.

10. A fuel cell comprising the membrane-electrode assembly according to claim 8.
